# EUROPEAN PATENT SPECIFICATION

(11) **EP 1 475 955 B1**
(45) Date of publication and mention of the grant of the patent: **31.05.2006**
(21) Application number: 03252836.6
(22) Date of filing: 06.05.2003
(51) Int. Cl.: H04N 3/15

(54) **Calibration scheme for logarithmic image sensor**
Kalibrierungseinrichtung für einen logarithmischen Bildsensor
Système de calibration pour un capteur d'image logarithmique

(43) Date of publication of application: 10.11.2004
(73) Proprietor: STMicroelectronics Limited, Marlow, Buckinghamshire SL7 1YL (GB)
(72) Inventor: Storm, Graeme, Edinburgh, EH16 5XP (GB); Hurwitz, Jonathan Ephriam David, Edinburgh, EH13 OJT (GB)
(74) Representative: Cooper, John

(56) References cited:
- US-B1- 6 355 965
- US-B1- 6 535 247

## Description

This invention relates to solid state image sensors.

Dynamic range is a very important parameter of any imaging system. Human vision has the capability to see detail across a wide illumination range in a single scene and is reported to exhibit around 200dB of dynamic range. Scenes in excess of 100dB are not uncommon in everyday situations, and thus designers of CMOS and CCD image sensors are continually looking for ways to increase dynamic range.

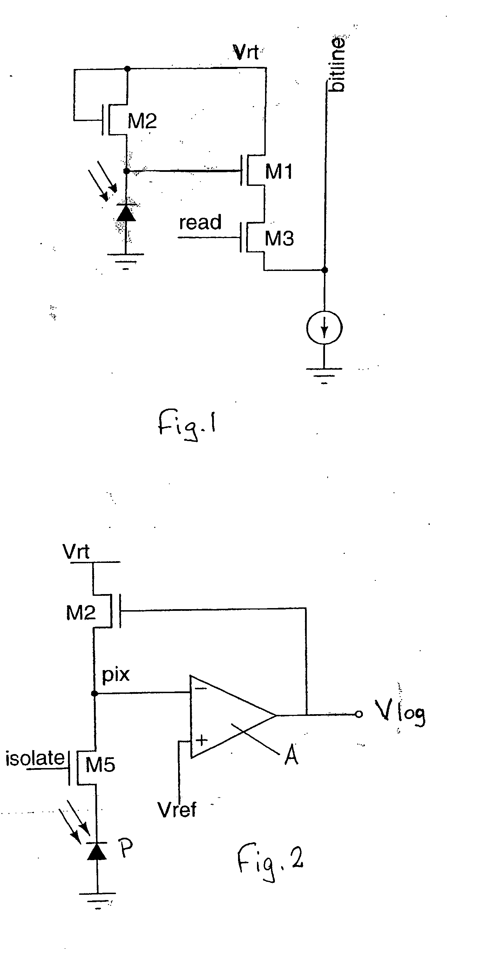

It is known to use sensors having logarithmic characteristics to image scenes of high dynamic range. In logarithmic mode the pixel voltage is continuously available to the outside world and no integration time is used. In a typical CMOS arrangement, the induced photocurrent flows through one or more MOS transistors and sets up a gate-source voltage which is proportional to the logarithm of the photocurrent. This is shown in Figure 1 where the gate-source voltage appears across the device M2. As the photocurrent is very small, the MOS device(s) will operate in sub-threshold and thus the voltage varies logarithmically with the photocurrent. The voltage is read out by source follower circuitry. Around six decades of light can be captured in logarithmic mode.

Due to the small size of the devices used in the pixels a high degree of mismatch results from process variations and produces fixed pattern noise (FPN) across the array. Logarithmic sensors cannot use double sampling (in its conventional form) as a means of mismatch removal, as this technique only removes the variation of the device M1 and does not alter the effect of device M2. This arises from the fact that the logarithmic architecture operates continuously in time and has no reference state.

Another disadvantage of the logarithmic arrangement is a slow response time for low light levels. Increased photocurrent for a given light level can be accomplished by increasing the size of the light sensing element, but this is not desirable as the cost for a given resolution will increase accordingly.

It is known to deal with the FPN problem by calibrating the pixels, that is by bringing them into a reference state so that the FPN can be learnt and then cancelled. The common way to calibrate a logarithmic pixel on-chip is to pull a matched current through the load device of each pixel by means of a current source in each column. This places the pixel into a known reference state that should be equivalent to illuminating the sensor with a uniform intensity. However, this requires an extra vertical line in each column for the current source, and the associated capacitance of the extra line prevents small calibration currents settling quickly.

US Patent 6,355,965 (He et al) shows an arrangement in which a calibration access transistor shorts the source follower and the calibration is performed without the need for an extra vertical line, but this still has problems of long settling time for low photocurrents.

Kavadias [1] pulls a high calibration current through the load device. This disclosure uses an nmos transistor and capacitor in column, not a constant current source. The calibration point can therefore be far from the operating point of the pixel due to the difference between photo and calibration currents.

Loose et al [2] stores a correction voltage in analog memory (a capacitor) in the pixel such that the signal voltage is free from offsets. The entire amplifier is in the column, and an extra vertical line is used to access the current source.

The present invention seeks to overcome or reduce these problems.

The invention provides an image sensor as defined in claim 1, and a method of calibrating an image sensor as defined in claim 10. Preferred features and advantages of the invention will be apparent from the other claims and from the following description.

An embodiment of the invention will now be described, by way of example only, with reference to the drawings, in which:
Figure 1 is a schematic illustrating the prior art, as discussed above; and
Figure 2 is a schematic of one pixel in an image sensor forming one example of the present invention.

Referring to Figure 2, a pixel has a photodiode P which causes a photocurrent to flow through device M2 thus causing it to operate in sub-threshold (assuming device M5 is on). The photodiode voltage at the node 'pix' is used as the inverting input to amplifier A, the non-inverting input receiving a reference voltage Vref. The node 'pix' will be held at Vref (plus the offset of the amplifier) and the logarithmic result will be available at the output of the amplifier A.

To calibrate the pixel, the node 'pix' is isolated from the photodiode P by means of device M5 to eliminate the effects of photocurrent. The reference voltage Vref is now ramped and, due to the amplifier feedback loop, the voltage at 'pix' will try to track it. As the pixel voltage rises it will induce a current which must be supplied through M2.

The ramp voltage is applied to make use of the fact that a constant current can be generated if there is a constant voltage change across a constant capacitance. Using the formula I = C*dV/dt and knowing the capacitance, a voltage ramp can be programmed to produce a constant current.

In Figure 2, the capacitance of the pixel is given by the capacitance on the drain of device M5 and the gate capacitance of the inverting input of the amplifier A. If these capacitances are well matched across the array then the calibration currents will be matched.

This arrangement allows the pixels to be calibrated without the use of additional vertical lines and current sources. It also offers a means of producing very small calibration currents without the settling time problems associated with current sources and vertical access lines with large capacitance.

As well as providing a calibration current, the ramping of Vref can be used to aid the settling time of the circuit when the device M5 is on and the logarithmic voltage is dependent on the photocurrent. The node 'pix' is able to charge up quickly as the feedback loop will cause the device M2 to turn on more strongly and supply more current. However, 'pix' can only discharge with the current supplied from the photodiode P which could be very small and cause a very long settling time. If the amplifier has any overshoot then this settling time could be a problem for low photocurrents. By ramping Vref the oscillations can be absorbed by the ramp and the at the end of the ramping period the circuit should settle more quickly.

The amplifier can be completely within the pixel, as shown. Alternatively, the amplifier could be formed partly within the pixel and partly within the column and switched between pixels as required.

The invention thus provides an improved means for calibrating a logarithmic pixel.

### References

[1] Kavadias, "A logarithmic response CMOS image sensor with on-chip calibration", IEEE Journal of solid-state circuits, vol. 35, No. 8, August 2000.
[2] M. Loose, K. Meier and J. Schemmel, "A Self-Calibrating Single-Chip CMOS Camera with Logarithmic Response", IEEE Journal of solid-state circuits, vol. 36, No. 4, April 2001.

## Claims

1. A solid-state image sensor comprising an array of pixels, in which each pixel comprises a photodiode (P) in circuit with a semiconductor device (M2) operating in sub-threshold to provide a signal which is proportional to the logarithm of the light intensity on the photodiode (P), and means for calibrating the pixels; **characterised in that** the means for calibrating each pixel comprises means for applying a voltage having a constant rate of change across a constant capacitance within that pixel thereby to produce a constant current within the pixel, and wherein each pixel includes a switching device (M5) between the photodiode (P) and said semiconductor device (M2), the switching device (M5) being operable during calibration to isolate the photodiode (P) from the semiconductor device (M2).

2. An image sensor according to claim 1, in which said signal is applied to the inverting input of an inverting amplifier (A), the non-inverting input of the amplifier (A) being connected to a reference voltage (Vref), the amplifier (A) output providing the pixel output signal.

3. An image sensor according to claim 2, in which during calibration a ramp voltage is applied to said non-inverting input to provide said constant rate of change of voltage.

4. An image sensor according to claim 3, in which said ramp voltage can also be applied as the reference voltage at the beginning of image-capturing operation of the pixel.

5. An image sensor according to any of claims 2 to 4, in which said semiconductor device (M2) is controlled by a feedback loop from the output of the amplifier (A).

6. An image sensor according to any of claims 2 to 5, in which said amplifier (A) for each pixel is wholly contained within the pixel.

7. An image sensor according to any of claims 2 to 5, in which said amplifier (A) for each pixel is partly contained within the pixel and partly outside the image area.

8. An image sensor according to any of claims 2 to 7, in which said constant capacitance is provided by the capacitance of the drain of said semiconductor device (M2) and the capacitance of the inverting input of the amplifier (A).

9. A method of calibrating a solid-state image sensor operating in logarithmic mode, in which a constant current is applied to each pixel during calibration to derive pixel reference values; **characterised in that** said constant current is generated within each pixel by applying a voltage having a constant rate of change across a constant capacitance within that pixel, and wherein a switching device (M5) between a photodiode (P) and a semiconductor device (M2) is operated during calibration to isolate the photodiode (P) from the semiconductor device (M2)

## Patentansprüche

1. Ein Festkörperbildsensor, der ein Muster von Pixeln beinhaltet, bei dem jedes Pixel eine Photodiode (P) schaltungsintern mit einem Halbleiterbauelement (M2), das unter dem Schwellenwert arbeitet, um ein Signal bereitzustellen, welches zum Logarithmus der Lichtstärke auf der Photodiode (P) proportional ist, und ein Mittel zum Kalibrieren jedes Pixels beinhaltet; **dadurch gekennzeichnet, dass** das Mittel zum Kalibrieren jedes Pixels ein Mittel zum Anlegen einer Spannung mit einer konstanten Änderungsrate über eine konstante Kapazität innerhalb dieses Pixels beinhaltet, um **dadurch** einen Konstantstrom innerhalb des Pixels zu produzieren, und wobei jedes Pixel ein Schaltgerät (M5) zwischen der Photodiode (P) und dem Halbleiterbauelement (M2) umfasst, wobei das Schaltgerät (M5) während der Kalibrierung betriebsfähig ist, um die Photodiode (P) von dem Halbleiterbauelement (M2) zu isolieren.

2. Bildsensor gemäß Anspruch 1, bei dem das Signal auf den invertierenden Eingang eines invertierenden Verstärkers (A) angelegt wird, wobei der nichtinvertierende Eingang des Verstärkers (A) an eine Referenzspannung (Vref) angeschlossen ist, wobei der Ausgang des Verstärkers (A) das Pixelausgangssignal **bereitstellt.**

3. **Bildsensor gemäß Anspruch 2, bei dem während der Kalibrierung** eine Rampenspannung auf den nichtinvertierenden Eingang angelegt wird, um die konstante Änderungsrate der Spannung bereitzustellen.

4. Bildsensor gemäß Anspruch 3, bei dem die Rampenspannung auch als Referenzspannung am Beginn des Bildaufnahmevorgangs des

5. Bildsensor gemäß einem der Ansprüche 2 bis 4, bei dem das Halbleiterbauelement (M2) durch eine Rückkopplungsschleife von dem Ausgang des Verstärkers (A) gesteuert wird.

6. Bildsensor gemäß einem der Ansprüche 2 bis 5, bei dem der Verstärker (A) für jedes Pixel gänzlich innerhalb des Pixels enthalten ist.

7. Bildsensor gemäß einem der Ansprüche 2 bis 5, bei dem der Verstärker (A) für jedes Pixel teilweise innerhalb des Pixels und teilweise außerhalb des Bildbereichs enthalten ist.

8. Bildsensor gemäß einem der Ansprüche 2 bis 7, bei dem die konstante Kapazität durch die Kapazität des Drains des Halbleiterbauelements (M2) und die Kapazität des invertierenden Eingangs des Verstärkers (A) bereitgestellt wird.

9. Ein Verfahren des Kalibrierens eines Festkörperbildsensors, der im logarithmischen Modus arbeitet, bei dem während der Kalibrierung ein Konstantstrom auf jedes Pixel angelegt wird, um Pixelreferenzwerte abzuleiten; **dadurch gekennzeichnet, dass** der Konstantstrom innerhalb jedes Pixels erzeugt wird, indem eine Spannung mit einer konstanten Änderungsrate über eine konstante Kapazität innerhalb des Pixels angelegt wird, und wobei ein Schaltgerät (M5) zwischen einer Photodiode (P) und einem Halbleiterbauelement (M2) während der Kalibrierung betrieben wird, um die Photodiode (P) von dem Halbleiterbauelement (M2) zu isolieren.

## Revendications

1. Un détecteur d'image à l'état solide comportant une matrice de pixels, dans lequel chaque pixel comporte une photodiode (P) en circuit avec un dispositif à semi-conducteur (M2) fonctionnant en sous-seuil pour fournir un signal qui est proportionnel au logarithme de l'intensité lumineuse sur la photodiode (P), et un moyen pour calibrer les pixels ; **caractérisé en ce que** le moyen pour calibrer chaque pixel comporte un moyen destiné à appliquer une tension ayant un taux de changement constant sur une capacité constante au sein de ce pixel pour produire de cette façon un courant constant au sein du pixel, et dans lequel chaque pixel comprend un dispositif de commutation (M5) entre la photodiode (P) et ledit dispositif à semi-conducteur (M2), le dispositif de commutation (M5) pouvant fonctionner durant le calibrage pour isoler la photodiode (P) du dispositif à semi-conducteur (M2).

2. Un détecteur d'image selon la revendication 1, dans lequel ledit signal est appliqué sur l'entrée inverseuse d'un amplificateur inverseur (A), l'entrée non inverseuse de l'amplificateur (A) étant connectée à une tension de référence (Vref), la sortie d'amplificateur (A) fournissant le signal de sortie de pixel.

3. Un détecteur d'image selon la revendication 2, dans lequel durant le calibrage une tension en rampe est appliquée sur ladite entrée non inverseuse pour fournir ledit taux de changement de tension constant.

4. Un détecteur d'image selon la revendication 3, dans lequel ladite tension en rampe peut être également appliquée en tant que tension de référence au début de l'opération de capture d'image du pixel.

5. Un détecteur d'image selon n'importe lesquelles des revendications 2 à 4, dans lequel ledit dispositif à semi-conducteur (M2) est contrôlé par une boucle de rétroaction depuis la sortie de l'amplificateur (A).

6. Un détecteur d'image selon n'importe lesquelles des revendications 2 à 5, dans lequel ledit amplificateur (A) pour chaque pixel est entièrement contenu au sein du pixel.

7. Un détecteur d'image selon n'importe lesquelles des revendications 2 à 5, dans lequel ledit amplificateur (A) pour chaque pixel est contenu en partie au sein du pixel et en partie à l'extérieur de la zone d'image.

8. Un détecteur d'image selon n'importe lesquelles des revendications 2 à 7, dans lequel ladite capacité constante est fournie par la capacité du drain dudit dispositif à semi-conducteur (M2) et la capacité de l'entrée inverseuse de l'amplificateur (A).

9. Une méthode de calibrage d'un détecteur d'image à l'état solide fonctionnant en mode logarithmique, dans lequel un courant constant est appliqué sur chaque pixel durant le calibrage pour dériver des valeurs de référence de pixel ; **caractérisée en ce que** ledit courant constant est généré au sein de chaque pixel en appliquant une tension ayant un taux de changement constant sur une capacité constante au sein de ce pixel, et dans laquelle un dispositif de commutation (M5) entre une photodiode (P) et un dispositif à semi-conducteur (M2) est amené à fonctionner durant le calibrage pour isoler la photodiode (P) du dispositif à semi-conducteur (M2).
